(19) **Europäisches Patentamt / European Patent Office / Office européen des brevets**

(11) **EP 2 397 680 A2**

(12) **EUROPEAN PATENT APPLICATION**

(43) Date of publication:
21.12.2011 Bulletin 2011/51

(51) Int Cl.:
*F02D 41/34* *(2006.01)*     *F02M 69/04* *(2006.01)*

(21) Application number: 11170027.4

(22) Date of filing: 15.06.2011

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 15.06.2010 JP 2010136485

(71) Applicant: **Mitsubishi Jidosha Kogyo Kabushiki Kaisha**
**Tokyo 108-8410 (JP)**

(72) Inventor: **Tanaka, Dai**
**Tokyo, Tokyo 108-8410 (JP)**

(74) Representative: **Vossius & Partner**
**Siebertstrasse 4**
**81675 München (DE)**

(54) **Internal combustion engine**

(57) In an internal combustion engine, an injector injects fuel into an intake passage, an intake stroke injection means causes the injector to inject fuel in an intake stroke, an exhaust stroke injection means causes the injector to inject fuel in an exhaust stroke, a fuel pressure setting means sets fuel pressure according to a rotation speed and a load of the internal combustion engine, and an injection control means controls an operation ratio of the intake stroke injection means and the exhaust stroke injection means according to the rotation speed and the load of the internal combustion engine and the fuel pressure which is set by the fuel pressure setting means. The injection control means sets fuel injection timing of the injector.

EP 2 397 680 A2

**Description**

Technical Field

The present invention is related to an internal combustion engine which can control the conditions of fuel injection into an intake passage, without directly providing within a cylinder a direct-injection injector which injects fuel into the cylinder, thereby obtaining high performance.

Background Art

As an internal combustion engine (engine), an engine including a direct-injection injector which is provided within a cylinder to inject fuel into the cylinder directly, and a port injection injector which injects fuel into an intake passage are known (refer to Patent Document 1).

In the engine including the direct-injection injector and the port-injection injector, through so-called stratified lean burn in which an air-fuel mixture having rich fuel around an ignition plug can be gathered by directly injecting high-pressure fuel into the cylinder from the direct-injection injector, burning can be performed in a direction in which the total air-fuel ratio is lean and a significant reduction in fuel consumption can be realized. Additionally, latent heat of vaporization of fuel can be utilized for the cooling of intake air, and the temperature of an air-fuel mixture can be lowered to suppress the occurrence of knocking. Moreover, since the air density can be raised by the cooling of the intake air, the intake air amount at the time of full-load can be increased to improve performance. Additionally, by injecting fuel into the intake passage from the port-injection injector, the homogenization of the air-fuel mixture can be promoted in a low-load operation region where the flow within a cylinder is weak and the homogeneity of the air-fuel mixture deteriorates.

However, in the engine including the direct-injection injector and the port-injection injector, the tip of the direct-injection injector provided within the cylinder may be exposed to high-temperature and high-pressure combustion gas. For this reason, even in a case where fuel is injected from the port-injection injector in order to promote the homogeneity of the air-fuel mixture, it is necessary to continue the injection of fuel from the direct-injection injector in order to cool the tip of the direct-injection injector through the cooling action of fuel injection. Thus, in the present situation, fuel injection cannot be performed from only the port-injection injector. Additionally, since a portion of the fuel injected from the direct-injection injector collides against the wall of a combustion chamber, and is burned in a liquid film state, there is a problem in that a large amount of particulate substances is exhausted. Moreover, since fuel is injected at high pressure from the direct-injection injector, there is a concern that the power loss of a high-pressure pump will affect performance.

Additionally, since the direct-injection injector requires the securing of temperature resistance and pressure resistance, and the tip thereof is exposed to combustion gas, deposits are apt to be accumulated depending on the operating conditions due to burning products or the carbonization of fuel, and measures in regard to the deposits are required. For this reason, in the internal combustion engine including the direct-injection injector, there is a problem in that the cost of a fuel injection system is large.

Citation List

[Patent Document 1] Japanese Patent Publication No. 2009-228447

Summary of Invention

Technical Problem

The invention has been made in consideration of the above circumstances, and the object thereof is to provide an internal combustion engine which can control the conditions of fuel injection into an intake passage without providing within a cylinder a direct-injection injector which injects fuel into the cylinder, thereby maintaining a performance from the performance in a case where fuel is directly injected into the cylinder, and obtaining high performance.

Solution to Problem

In order to achieve the above object, there is provided an internal combustion engine, comprising:

an injector which injects fuel into an intake passage;
an intake stroke injection means which causes the injector to inject fuel in an intake stroke;
an exhaust stroke injection means which causes the injector to inject fuel in an exhaust stroke;
a fuel pressure setting means which sets fuel pressure according to a rotation speed and a load of the internal combustion engine; and

an injection control means which controls an operation ratio of the intake stroke injection means and the exhaust stroke injection means according to the rotation speed and the load of the internal combustion engine and the fuel pressure which is set by the fuel pressure setting means, and sets fuel injection timing of the injector.

In the invention, fuel is injected into the intake passage during an intake stroke by the intake stroke injection means, and the fuel is made to flow into a cylinder when an intake valve is opened. Additionally, fuel is injected into the intake passage during an exhaust stroke by the exhaust stroke injection means according to the rotation speed and load of the engine, and the fuel pressure. The operation ratio of the intake stroke injection means and the exhaust stroke injection means is controlled by the injection control means.

In the fuel injection using the intake stroke injection means, fuel is injected when the intake valve is being opened, whereby the adhesion of fuel to a wall surface is suppressed to utilize the latent heat of vaporization of the fuel not for the cooling of a wall surface with a large specific heat but for the cooling of intake air, thereby lowering the temperature of an air-fuel mixture to suppress the occurrence of knocking, and raising the air density to increase the intake air amount at the time of full load. In the fuel injection using the injector, when the intake valve is being opened, fuel passes between a valve seat and an umbrella portion and is directed to a cylinder.

In the fuel injection using the exhaust stroke injection means, the fuel (air-fuel mixture) which is mixed with air within the intake port in advance is made to flow into a cylinder. Thus, the homogeneity of the air-fuel mixture is promoted in a low-load operation region where the flow within the cylinder is weak, and homogenization of the air-fuel mixture deteriorates. Since the injector is provided in the intake passage, a simple structure is obtained which is not exposed to high-temperature and high-pressure combustion gas and does not require the securing of temperature resistance and pressure resistance. Additionally, since it is not necessary to inject high-pressure fuel, a high-pressure pump is unnecessary, and the influence on the performance resulting from the power loss of a pump can be made small.

For this reason, by controlling the conditions of fuel injection to the intake passage without providing within a cylinder a direct-injection injector which injects fuel directly into the cylinder, i.e., by setting the ratio of fuel injection in an intake stroke and fuel injection in an exhaust stroke according to operating conditions, it is possible to maintain a performance from the performance in a case where fuel is directly injected into the cylinder, and obtain high performance.

The internal combustion engine may be configured such that as the rotation speed is faster and the load is higher, the fuel pressure setting means sets the fuel pressure to be higher.

In the invention, as the rotation speed of the engine is faster and the load is higher, the fuel pressure is set to be higher. Thus, a required amount of fuel can be injected in a short injection period by making the fuel pressure high at the time of a high-speed and high-load operation where the period (time) of each stroke is short and the required fuel injection amount increases.

The internal combustion engine may be configured such that as the rotation speed is slower and the load is higher, the injection control means controls the operation ratio of the intake stroke injection means to be larger.

In the invention, at the time of a low-speed and high-load operation, the ratio in which fuel is injected in an intake stroke is made large, whereby the latent heat of vaporization of the fuel is utilized for the cooling of intake air. Thus, the occurrence of knocking is suppressed, the air density is raised to increase the intake air amount, and high output is obtained.

The internal combustion engine may further comprise a fuel pressure detecting means which detects an actual fuel pressure, and may be configured such that the injection control means changes the operation ratio of the intake stroke injection means and the exhaust stroke injection means in a case where the actual fuel pressure detected by the fuel pressure detecting means is different from a target fuel pressure.

In the invention, when the actual fuel pressure is different from the target fuel pressure, i.e., during fuel pressure control, the operation ratio of the intake stroke injection means and the exhaust stroke injection means is changed, and fuel injection suited to the actual operating conditions is implemented.

Additionally, in the internal combustion engine, it is preferable that the intake stroke injection means injects fuel from the injector before displacement speed of the intake valve in the closing direction occurs, and if it is determined that a predetermined amount of fuel cannot be injected in this period, the injection of fuel from the injector is extended until the period for which the displacement speed of the intake valve in the closing direction occurs.

Advantageous Effects of Invention

The internal combustion engine of the invention can control the conditions of fuel injection into an intake passage without providing within a cylinder a direct-injection injector which injects fuel into the cylinder, thereby maintaining a performance from the performance in a case where fuel is directly injected into the cylinder, and obtaining high performance.

Brief Description of Drawings

Fig. 1 is a schematic configuration view of an internal combustion engine related to one embodiment of the invention.
Fig. 2 is a configuration view of chief parts in Fig. 1.
Fig. 3 is a schematic block diagram showing the functions of injection control.
Fig. 4 is a control flow chart of fuel injection.
Fig. 5 is a control flow chart of fuel injection.
Fig. 6 is a control map which sets fuel pressure.
Fig. 7 is a control map which sets the injection ratio of an intake stroke.
Fig. 8 is a view showing changes over time of a fuel injection situation and a valve operation.
Fig. 9 is a view showing changes over time of fuel injection conditions and a value operation.
Fig. 10 is a view showing changes over time of fuel injection conditions and a value operation.
Fig. 11 is a view showing changes over time of the lift operation and displacement speed of an intake valve.

Description of Embodiments

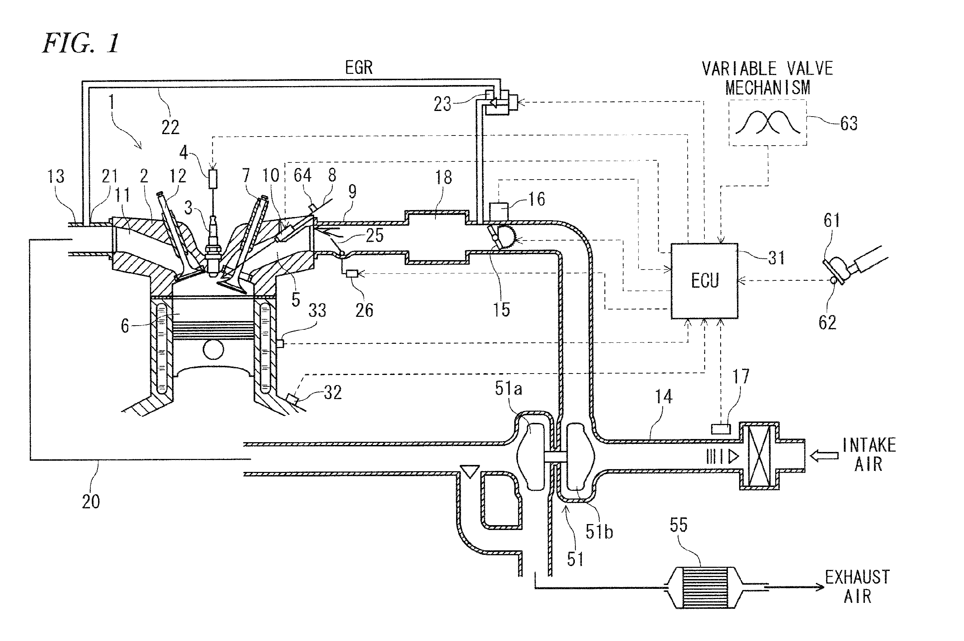

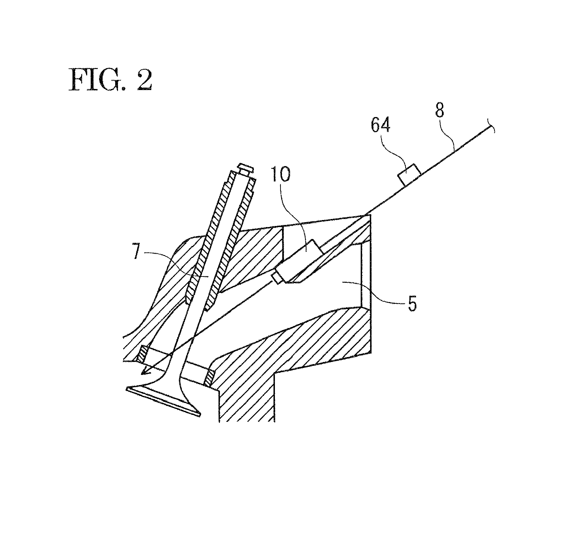

The internal combustion engine of the invention will be described with reference to Figs. 1 and 2.
Fig. 1 shows the schematic configuration of the overall internal combustion engine related to one embodiment of the invention, and Fig. 2 shows the configuration around an intake port.
As shown in Fig. 1, an ignition plug 3 for each cylinder is attached to a cylinder head 2 of an engine body (hereinafter referred to as "engine") 1 which is an internal combustion engine (engine), and an ignition coil 4 which outputs a high voltage is connected to the ignition plug 3. The cylinder head 2 is formed with an intake port 5 (intake passage) for each cylinder, and an intake valve 7 is provided on the side of a combustion chamber 6 of each intake port 5. The intake valve 7 is opened or closed following a cam of a cam shaft (not shown) which rotates according to the rotation of the engine so as to perform the communication or blocking between each intake port 5 and the combustion chamber 6.
One end of an intake manifold 9 is connected to each intake port 5, and the intake manifold 9 communicates with the intake port 5. An electromagnetic fuel injection valve (injector) 10 is attached to the intake manifold 9, and fuel is supplied to the injector 10 via a fuel pipe 8 from a fuel tank. The electromagnetic fuel injection valve 10 may be attached to the cylinder head 2.
Additionally, the cylinder head 2 is formed with an exhaust port 11 for each cylinder, and an exhaust valve 12 is provided on the side of the combustion chamber 6 of the exhaust port 11. The exhaust valve 12 is opened or closed following a cam of a cam shaft (not shown) which rotates according to the rotation of the engine so as to perform communication or blocking between each exhaust port 11 and the combustion chamber 6. Also, one end of an exhaust manifold 13 is connected to each exhaust port 11, and the exhaust manifold 13 communicates with the exhaust port 11.
In addition, since such an engine is known, details of the configuration thereof are omitted.
An intake pipe 14 is connected to the intake manifold 9 on the upstream side of the injector 10, an electromagnetic throttle valve 15 is attached to the intake pipe 14, and the intake pipe is provided with a throttle position sensor 16 which detects the opening degree of the throttle valve 15. The stepped amount of an accelerator pedal 61 is detected by an accelerator position sensor 62, and the throttle valve 15 is operated on the basis of the detection information of the accelerator position sensor 62.
An air flow sensor 17 which measures intake air amount is provided on the upstream side of the throttle valve 15. As the air flow sensor 17, a Karman vortex type or hot film type air flow sensor is used. Additionally, the intake pipe 14 between the intake manifold 9 and the throttle valve 15 is provided with a surge tank 18.
An exhaust pipe 20 is connected to the other end of the exhaust manifold 13, and an exhaust gas recirculation port (EGR port) 21 branches to the exhaust manifold 13. One end of an EGR pipe 22 is connected to the EGR port 21, and the other end of the EGR pipe 22 is connected to the intake pipe 14 of an upstream portion of the surge tank 18. The EGR pipe 22 close to the surge tank 18 is provided with an EGR valve 23. As, the EGR valve 23 is opened, a portion of exhaust gas is introduced into the intake pipe 14 of the upstream portion of the surge tank 18 via the EGR pipe 22.
That is, the EGR pipe 22 and the EGR valve 23 constitute an exhaust gas recirculation means (EGR device). The EGR device is a device which recirculates a portion of exhaust gas to an intake system (surge tank 18) of the engine 1, lowers the combustion temperature within the combustion chamber 6, and reduces the discharge amount of nitrogen oxide (NOx). As the EGR valve 23 is opened or closed, a portion of exhaust gas is recirculated to an intake system as EGR gas at a predetermined EGR rate according to an opening degree.
Additionally, as the exhaust gas is recirculated to the intake system of the engine 1 by the EGR device, the amount of air which is controlled by the throttle valve 15 can be reduced. That is, even if the throttle valve 15 is opened, a large amount of air does not flow in, and the throttling loss of the throttle valve 15 can be reduced. Additionally, even in a low-speed and low-rotation region, turbulence can be caused in the intake air which flows into the combustion chamber.

Meanwhile, the intake manifold 9 is provided with a tumble flap 25, and the tumble flap 25 is opened or closed by an actuator 26, such as a negative pressure actuator. The tumble flap 25 is constituted by an openable/closablevalve, such as a butterfly valve or a shutter valve, and the tumble flap 25, as shown in Fig. 1, is adapted to open or close the lower half of the intake passage. That is, an opening portion is formed on the upper side of a cross-section of the intake passage by closing the tumble flap 25, and a vertical tumble stream is generated inside the combustion chamber 6 by narrowing the cross-sectional area of the intake passage.

Additionally, the intake pipe 14 of the upstream portion of the surge tank 18 is provided with a supercharger 51. In the supercharger 51, exhaust gas of the engine 1 rotates an exhaust turbine 51 a provided at the exhaust manifold 13, intake air is pressurized and increased in volumetric density by the operation of an intake compressor 51 b directly connected to the exhaust turbine 51 a, and the intake air which is pressurized and increased in volumetric density is sent (supercharged) to the combustion chamber 6.

An exhaust purifying catalyst (for example, a ternary catalyst) 55 is interposed in the exhaust pipe 20 connected to the exhaust manifold 13, and exhaust gas is purified by the exhaust purifying catalyst 55. For example, in the exhaust purifying catalyst 55, hydrocarbons (HC), carbon monoxide (CO), and nitrogen oxide (NOx), and the like in exhaust gas are purified when the exhaust air-fuel ratio is near the theoretical air-fuel ratio (stoichiometric ratio). Additionally, when the exhaust air-fuel ratio has reached an oxidation atmosphere (lean air-fuel ratio), HC or CO is oxidized or purified, and oxygen ($O_2$) is stored until the exhaust air-fuel ratio reaches a reduction atmosphere (rich air-fuel ratio). When the exhaust air-fuel ratio has reached the rich air-fuel ratio, NOx is reduced or purified, the stored $O_2$ is released, and HC or CO is oxidized or purified.

The engine 1 is provided with a variable valve mechanism 63 which arbitrarily changes the lift amount and lift timing (valve operating conditions) of the intake valve 7 and the exhaust valve 12. As the phase of the cam is changed by the variable valve mechanism 63, the operating conditions of the intake valve 7 and the exhaust valve 12 are arbitrarily set. Additionally, the fuel pipe 8 is provided with a fuel pressure sensor 64 which detects the pressure of the fuel supplied to the injector 10. Moreover, the engine 1 is provided with a crank angle sensor 32 which detects a crank angle to obtain engine rotation speed (Ne), and a water temperature sensor 33 which detects the temperature of cooling water.

ECU (Electronic Control Unit) 31 includes an input/output unit, a storage unit (ROM, RAM, and the like), a central processing unit (CPU), a timer counter, and the like. The integrated control of the engine 1 is performed by the ECU 31.

Various sensors, such as the above-described throttle position sensor 16, air flow sensor 17, crank angle sensor 32, water temperature sensor 33, accelerator position sensor 62, and fuel pressure sensor 64, are connected to the input side of the ECU 31, and the detection information of these sensors is input thereto. Additionally, the information of the variable valve mechanism 63 is input to the ECU 31, and information regarding the lift amount and lift timing of the intake valve 7 and the exhaust valve 12 is sent to the EGU.

Meanwhile, various output devices, such as the above-described ignition coil 4, the throttle valve 15, a driving device of the injector 10, the EGR valve 23, the actuator 26 of the tumble flap 25, and the variable valve mechanism 63, are connected to the output side of the ECU 31. The fuel injection amount, fuel injection period, fuel injection timing, ignition timing, the operation timing and operation amount of the EGR valve 23, the operation timing of the tumble flap 25, and the operating conditions (valve operating conditions) of the intake valve 7 and the exhaust valve 12, which are calculated by the ECU 31 on the basis of the detection information of the various sensors, are output to these various output devices.

The air-fuel ratio is set to a proper target air-fuel ratio on the basis of the detection information from the various sensors, the fuel of the amount according to the target air-fuel ratio is injected from the injector 10 at a proper timing, the throttle valve 15 is adjusted to a proper degree of opening, and spark ignition is implemented at a proper timing by the ignition plug 3.

The engine 1 of the present embodiment is adapted to inject fuel from the injector 10 during an intake stroke and inject fuel from the injector 10 during an exhaust stroke. In addition, if the intake valve 7 is being opened when the injected fuel has reached the vicinity of the intake valve 7, this case is defined as intake stroke injection. If the intake valve 7 has not yet been opened, this case is defined as exhaust stroke injection. In practice, since there exist time delays, such as a valve opening delay of an injector valve until fuel reaches the vicinity of the intake valve 7 from an injector driving command, and a transport delay from the injector 10 to the intake valve 7, the injector driving command for the intake stroke injection may be performed during an exhaust stroke.

By injecting fuel during an intake stroke in which the intake valve 7 is opened, adhesion of fuel to an umbrella portion of the intake port 5 or the intake valve 7 is suppressed, so that latent heat of vaporization of the fuel can be utilized for cooling of intake air.

For this reason, the temperature of an air-fuel mixture can be lowered to suppress the occurrence of knocking, the air density can be raised to increase the intake air amount at the time of full load, and, even in port injection, the effect of intake cooling can be exhibited to the maximum extent.

As shown in Fig. 2, as for the fuel injection using the injector 10, when the intake valve 7 is being opened, the fuel passes between a valve seat of the intake port 5 and the umbrella portion of the intake valve 7, and is directed to the inside of the combustion chamber 6. In this case, a swirl stream within the combustion chamber 6 can be intensified by unevenly distributing fuel on the upper side in the drawing across a valve shaft. Additionally, the swirl stream within the combustion chamber 6 can be intensified by unevenly distributing fuel in any one of the right and left directions across the valve shaft.

An air-fuel mixture in which fuel and air are sufficiently mixed uniformly inside the intake port 5 is obtained by injecting fuel from the injector 10 during an exhaust stroke. Since the injector 10 is provided at the intake port 5, the injector has a simple attachment structure which does not require the securing of temperature resistance or pressure resistance, without being exposed to high-temperature and high-pressure combustion gas. Additionally, since it is not necessary to inject high-pressure fuel, influence on the performance resulting from the power loss of a pump can be made to be small.

For this reason, by controlling a situation of fuel injection to the intake passage without providing within a cylinder a direct-injection injector which injects fuel directly into the cylinder, i.e., by setting the ratio of fuel injection in an intake stroke and fuel injection in an exhaust stroke according to operating conditions, it is possible to maintain a performance from the performance in a case where fuel is directly injected into the cylinder, and obtain high performance.

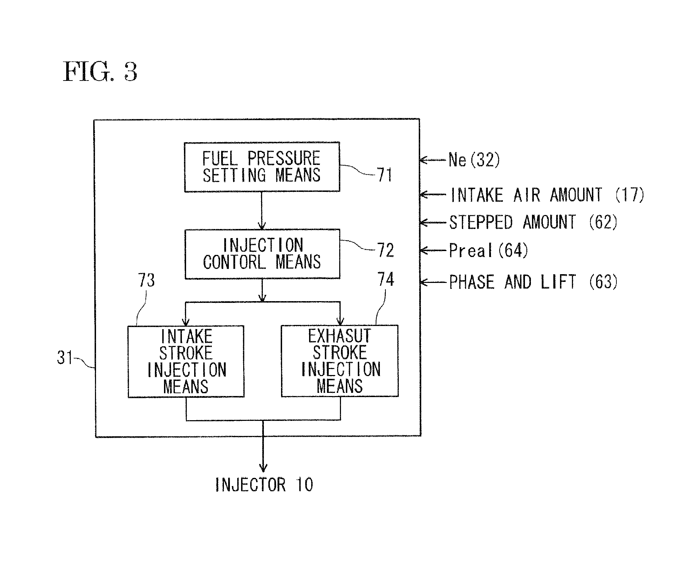

The ratio of fuel injection in an intake stroke and fuel injection in an exhaust stroke is set by an injection control means of the ECU 31 according to the operating conditions of the engine 1. Specific control situations will be described with reference to Figs. 3 to 11.

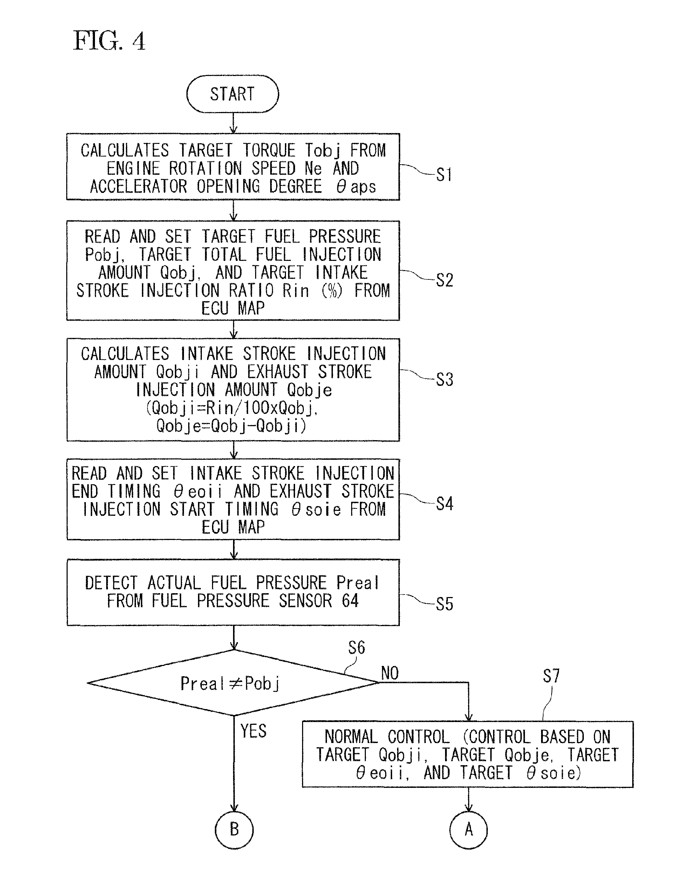

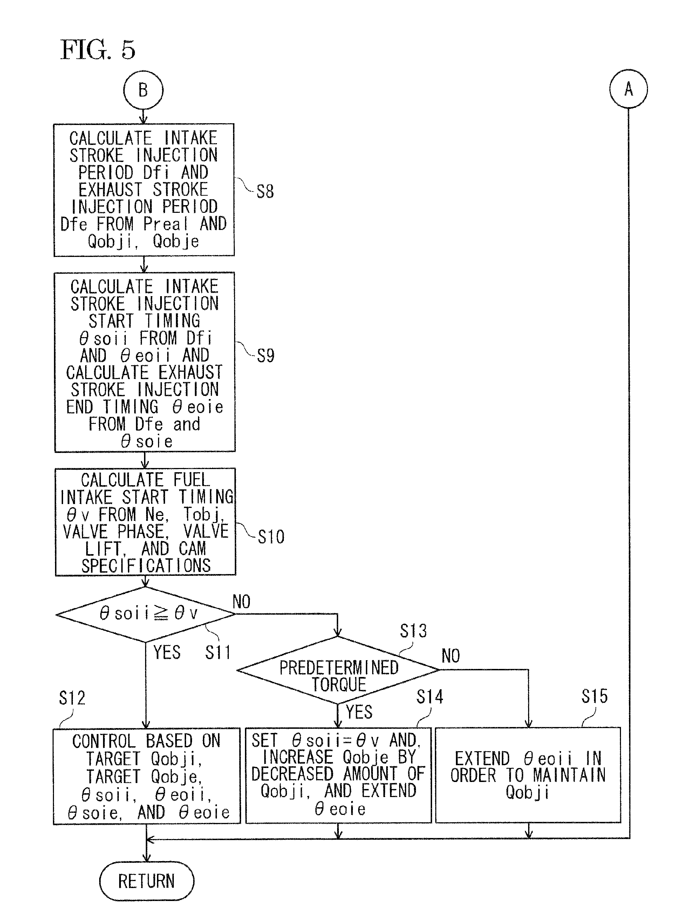

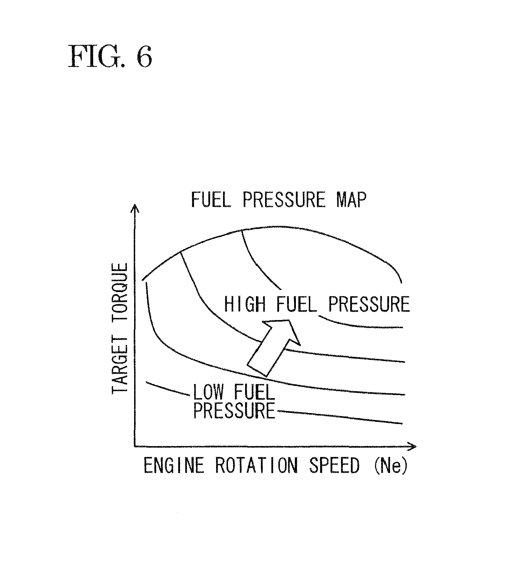

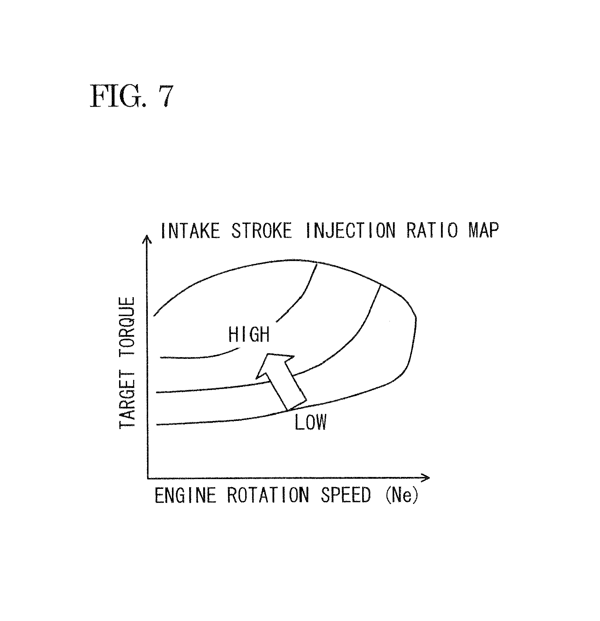

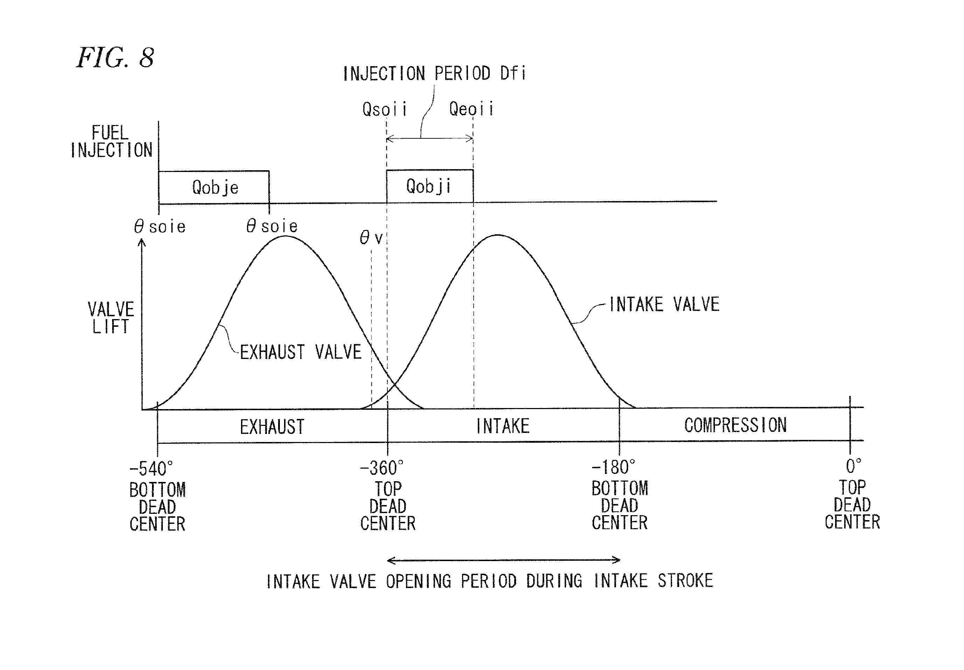

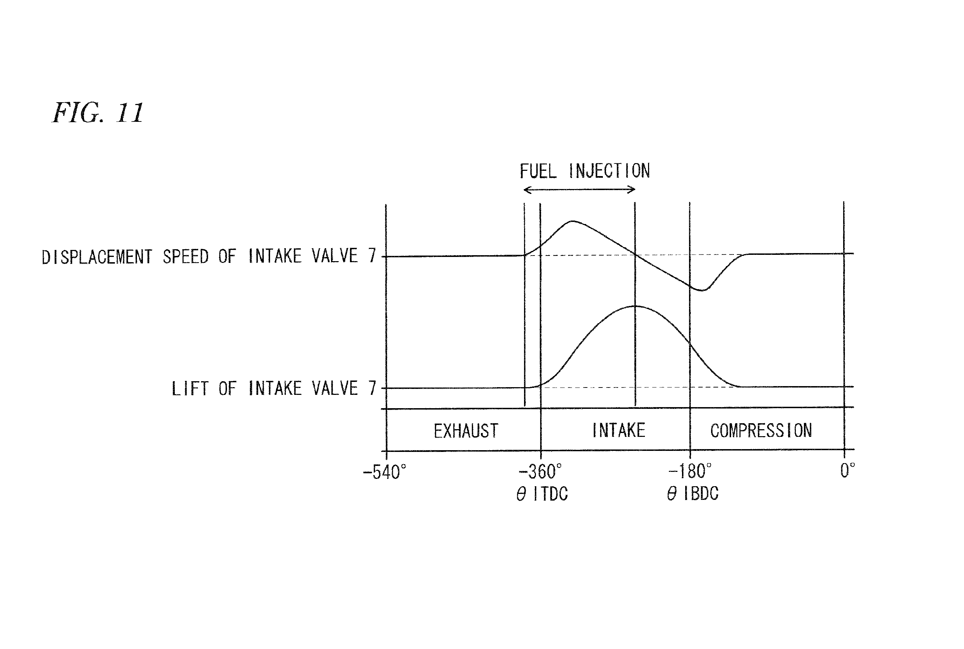

Fig. 3 shows schematic blocks showing the functions of injection control, Figs. 4 and 5 show flows describing a situation of fuel injection using a fuel injection means, Fig. 6 shows a map which sets fuel pressure, Fig. 7 shows a map which sets the injection ratio of an intake stroke, Figs. 8 to 10 show changes over time of fuel injection situations and valve operations, and Fig. 11 shows changes over time of the lift operation and displacement speed of an intake valve.

As shown in Fig. 3, the engine rotation speed Ne based on the detection information of the crank angle sensor 32, the detection information of the air flow sensor 17, the detection information of the accelerator position sensor 62, an actual fuel pressure Preal based on the detection information of the fuel pressure sensor 64, and phase and lift information (valve phase and valve lift) based on the information of the variable valve mechanism 63 are input to the ECU 31.

The ECU 31 is provided with a fuel pressure setting means 71 which sets fuel pressure (target fuel pressure) Pobj according to the engine rotation speed Ne and load (intake amount or the like) of the engine 1. The target fuel pressure Pobj set by the fuel pressure setting means 71 is sent to a injection control means 72. In the injection control means 72, the ratio of fuel injection in an intake stroke and fuel injection in an exhaust stroke is set according to the target fuel pressure Pobj, and the engine rotation speed Ne and load (intake amount or the like) of the engine 1.

Additionally, the ECU 31 is provided with an intake stroke injection means 73 which injects fuel from the injector 10 during an intake stroke, and an exhaust stroke injection means 74 which injects fuel from the injector 10 during an exhaust stroke. Driving commands are sent to the injector 10 from the intake stroke injection means 73 and the exhaust stroke injection means 74, and a predetermined amount of fuel is injected at predetermined stroke timing.

The information regarding the ratio of fuel injection in the intake stroke injection and fuel injection in the exhaust stroke injection which are set by the injection control means 72 is sent to the intake stroke injection means 73 and the exhaust stroke injection means 74, and driving commands are sent to the injector 10 from the intake stroke injection means 73 and the exhaust stroke injection means 74 according to the information regarding the ratio.

Specific processing conditions will be described with reference to Figs. 4 to 11.

As shown in Fig. 4, when processing is started, in Step S1, a target torque Tobj is calculated from the engine rotation speed Ne and accelerator opening degree θaps. In Step 2, the target fuel pressure Pobj, target total fuel injection amount Qobj, and target intake stroke injection ratio Rin (0% to 100%) are read and set from an ECU map. The target fuel pressure Pobj and the target intake stroke injection ratio Rin (0% to 100%) are set such that fuel efficiency, exhaust gas, and output are brought into optimal states at individual operation points.

As shown in Fig. 6, the target fuel pressure Pobj is set from the relationship between the target torque and the engine rotation speed Ne. As the engine rotation speed Ne becomes faster and the target torque (load) becomes higher, the fuel pressure (target fuel pressure) is set to be higher. That is, the required amount of fuel can be injected in a short injection period by making the fuel pressure high at the time of a high-speed and high-load operation where the period (time) of each stroke is short and the required fuel injection amount increases.

Additionally, the target intake stroke injection ratio Rin (0% to 100%), as shown in Fig. 7, is set such that, as the engine rotation speed Ne becomes slower and the target torque (load) becomes higher, the operation ratio of the intake stroke injection means 73 (refer to Fig. 3) becomes large. That is, at the time of a low-speed and high-load operation, the ratio in which fuel is injected in an intake stroke is made large, the occurrence of knocking is suppressed, the air density is raised to increase the intake air amount, and high output is obtained.

In a high-load region where knocking is apt to occur, the knocking is suppressed by an intake cooling effect due to the intake stroke injection. Therefore, the intake stroke injection ratio is raised, and the fuel pressure is set to be high. In a full load where the throttle valve is fully opened, filling efficiency due to the intake cooling effect can also be realized. Particularly, in a region of high engine rotation speed, the time for which fuel can be injected becomes short during an intake stroke. Therefore, the fuel pressure is set to be higher. In a low-load region where knocking does not occur, the power loss of the fuel pump is reduced. Therefore, the fuel pressure is set to be low. Also, in order to prevent deterioration in the fuel mixing, the exhaust stroke injection ratio is raised.

Referring back to the flow chart of Fig. 4, in Step S3, an intake stroke injection amount Qobji and an exhaust stroke injection amount Qobje are calculated according to the following Expressions (1) and (2).

$$Qobji = (Rin/100) \times Qobj \quad (1)$$

$$Qobje = Qobj - Qobji \quad (2)$$

That is, the intake stroke injection amount Qobji is obtained by multiplying the target intake stroke injection ratio Rin (0% to 100%) read from Fig. 7 by the target total fuel injection amount Qobj, and the exhaust stroke injection amount Qobje is obtained by subtracting the intake stroke injection amount Qobji from the target total fuel injection amount Qobj.

In Step S4, an intake stroke injection end timing θeoii and an exhaust stroke injection start timing θsoie are read and set from the ECU map. When the target fuel pressure Pobj, the intake stroke injection amount Qobji, the exhaust stroke injection amount Qobje, the intake stroke injection end timing θeoii, and the exhaust stroke injection start timing θsoie are set, in Step S5, the actual fuel pressure Preal is detected from the fuel pressure sensor 64.

The processing proceeds to Step S6, and whether or not the target fuel pressure Pobj and the actual fuel pressure Preal coincide with each other is determined in Step S6. If it is determined in Step S6 that Pobj and Preal do not coincide with each other, the fuel injection control is implemented in a normal state in Step S7. That is, the fuel injection is controlled on the basis of the target intake stroke injection amount (target Qobji), the target exhaust stroke injection amount (target Qobje), the target intake stroke injection end timing (target θeoii), and the target exhaust stroke injection start timing (target θsoie).

After the normal control is implemented, the processing proceeds to the flow chart (A) of Fig. 5 and proceeds to return. In addition, in a case where the normal control is implemented, it is also possible to perform a control so as to lower the fuel pressure if there is a margin for the fuel pressure, whereby the power loss of the fuel pump can be reduced.

If it is determined in Step S6 that Pobj and Preal do not coincide with each other, i.e., if it is determined that the fuel pressure control is being performed, the processing proceeds to the flow chart (B) of Fig. 5, the fuel injection period is set on the basis of the actual fuel pressure Preal, and the fuel injection in an intake stroke and the fuel injection in an exhaust stroke are controlled in a state where the maximum amount of fuel is injected in the intake stroke according to the actual fuel pressure Preal.

In this case, as for the injection end timing of the fuel injection in the intake stroke, the injection end timing is fixed in order to suppress fluctuation in the air-fuel ratio caused by blow-back to the intake port 5 or a change in the amount of adhesion to the umbrella portion of the intake valve 7. As shown in Fig. 11, the period until the lift becomes the maximum after the lift of the intake valve 7 is started becomes a period for which the displacement speed of the intake valve 7 in its opening direction occurs. In this period, fuel does not easily adhere to the intake valve 7, and is apt to enter a cylinder directly. On the other hand, a period after the lift of the intake valve 7 becomes the maximum, becomes a period for which the displacement speed of the intake valve 7 in the opening direction occurs. In this period, fuel is apt to adhere to the intake valve 7, and does not easily enter a cylinder directly.

For this reason, in order to promote the suction of fuel to a cylinder, it is desirable to end injection before the maximum lift timing. Additionally, when fuel injection is performed in a period for which the lift of the intake valve 7 does not become zero after an intake bottom dead center (BDC), blow-back to the intake port 5 from a cylinder occurs due to the ascent of a piston, and fuel no longer enters the cylinder directly. Therefore, this is not desirable. That is, it is desirable that the fuel injection end timing in the intake stroke injection is ended at the latest before the earlier one of when the lift of the intake valve 7 becomes zero and when the intake BDC is reached.

For this reason, fuel is injected and suction of fuel to a cylinder is promoted such that the central position of the fuel injection period is located before the closing of the intake valve 7. In this case, it is also possible to end the fuel injection before the maximum lift timing of the intake valve 7. As for the injection end timing of the fuel injection in the exhaust stroke, a change in the amount of adhesion to the umbrella portion of the intake valve 7 is small, and the air-fuel ratio within the cylinder is not influenced. Therefore, the injection end timing is made to be variable.

As shown in Fig. 5, in Step S8, an intake stroke injection period Dfi and an exhaust stroke injection period Dfe are calculated from the actual fuel pressure Preal, the intake stroke injection amount Qobji and the exhaust stroke injection amount Qobje. In Step S9, an intake stroke injection start timing θsoii is calculated from the intake stroke injection period Dfi and the intake stroke injection end timing θeoii. Additionally, an exhaust stroke injection end timing θeoie is calculated from the exhaust stroke injection period Dfe and the exhaust stroke injection start timing θsoie.

That is, the injection end timing of the fuel injection in the intake stroke is fixed, and the injection end timing of the fuel injection in the exhaust stroke is made to be variable.

In Step S10, a valve opening timing θv is calculated from the engine rotation speed Ne, the target torque Tobj, the valve phase, the valve lift, and cam specifications. The valve opening timing θv becomes a timing when the lift of the intake valve 7 (refer to Fig. 1) becomes a predetermined value or more, and there is inflow of air into a cylinder from intake port 5 (refer to Fig. 1).

In Step S11, it is determined whether or not the intake stroke injection start timing θsoii is equal to or more than the valve opening timing θv. In this case, the angle value of the intake stroke injection start timing θsoii and the angle value of the fuel intake start timing θv when the compression top dead center of a piston is 0°, the intake bottom dead center is -180°, the intake top dead center is -360°, and the exhaust bottom dead center is -540° are compared with each other.

If it is determined in Step S11 that the intake stroke injection start timing θsoii is equal to or more than the fuel intake start timing θv, i.e., if it is determined that intake stroke injection is started after the opening of the intake valve 7 (refer to Fig. 1), in Step S12, fuel injection is controlled on the basis of the target intake stroke injection amount (target Qobji), the target exhaust stroke injection amount (target Qobje), the intake stroke injection start timing θsoii the intake stroke injection end timing θeoii, the exhaust stroke injection start timing θsoie, and the exhaust stroke injection end timing θeoie, and the processing proceeds to return.

That is, if it is determined that the intake stroke injection start timing θsoii is equal to or more than the fuel intake start timing θv, there is a case where fuel can be injected during an intake stroke, and as shown in Fig. 8, the fuel of the target intake stroke injection amount (target Qobji) is injected in the intake stroke injection period Dfi from the intake stroke injection start timing θsoii to the intake stroke injection end timingθeoii. Additionally, the fuel of the target exhaust stroke injection amount (target Qobje) is injected in the exhaust stroke injection period Dfe from the exhaust stroke injection start timing θsoie to the exhaust stroke injection end timing θeoie.

If it is determined in Step S11 that the intake stroke injection start timing θsoii is less than the fuel intake start timing θv, it is determined in Step S13 whether or not the target torque Tobj is equal to or less than a predetermined torque. That is, if it is determined that the intake stroke injection is started before the opening of the intake valve 7 (refer to Fig. 1), there are cases where fuel cannot be injected during an intake stroke. When fuel cannot be injected during the intake stroke, it is determined whether or not a predetermined torque is required.

If it is determined in Step S13 that the target torque Tobj is equal to or less than a predetermined torque, there is a case where a predetermined torque is not required during an intake stroke. In this case, in Step S14, the intake stroke injection start timing θsoii is changed to the valve opening timing θv of the intake valve 7 (refer to Fig. 1), the target exhaust stroke injection amount (target Qobje) is raised by the amount Δt by which the target intake stroke injection amount (target Qobji) has decreased, the exhaust stroke injection end timing θeoie is extended, and the processing proceeds to return. The decreased target intake stroke injection amount (target Qobji) becomes aQobji (target Qobji > aQobji), and the raised target exhaust stroke injection amount (target Qobje) becomes aQobje (target Qobje < aQobje).

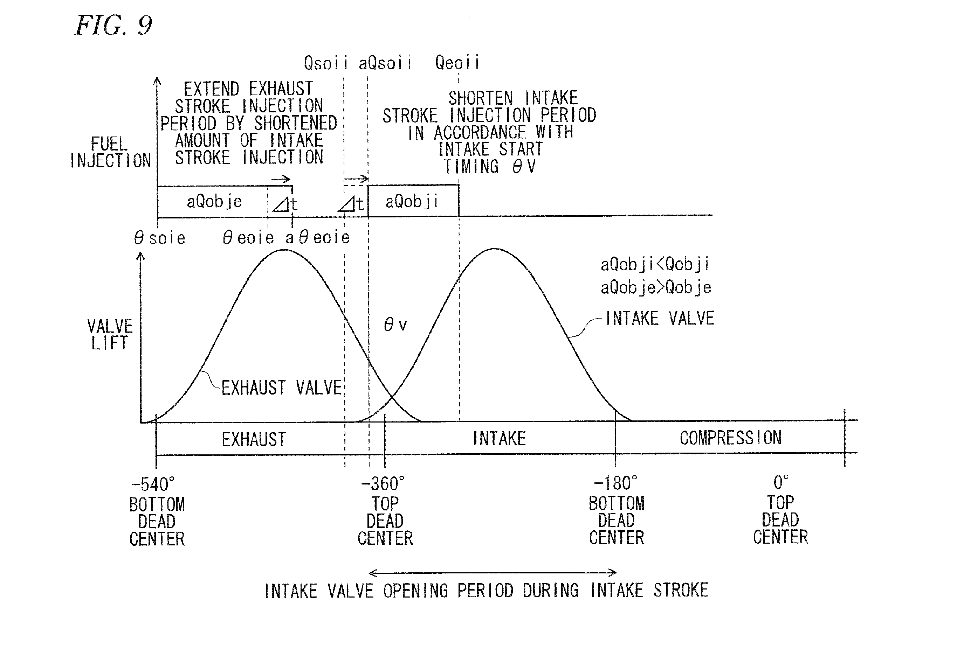

That is, as shown in Fig. 9, the intake stroke injection period is shortened in accordance with the fuel intake start timing θv (Expression 3), and the exhaust stroke injection period is extended by the shortened amount of the intake stroke injection timing (Expression 4).

$$aQobji = target\ Qobji - \Delta t \qquad (3)$$

$$aQobje = target\ Qobje + \Delta t \qquad (4)$$

Accordingly, in a case where a predetermined torque is not required when fuel cannot be injected during an intake stroke, a low-load region where knocking does not occur exists. Therefore, even if the intake stroke injection amount is reduced, knocking does not occur. Therefore, fuel injection is executed with the ratio of the exhaust stroke injection being made high by the amount by which the ratio of the intake stroke injection is made low, and the required amount of fuel is injected.

If it is determined in Step S13 that the target torque Tobj is more than a predetermined torque, there is a case where a predetermined torque is required when fuel cannot be injected during an intake stroke. In this case, in Step S15, in order to maintain the target intake stroke injection amount (target Qobji), the intake stroke injection end timing θeoii is extended, and the processing proceeds to return.

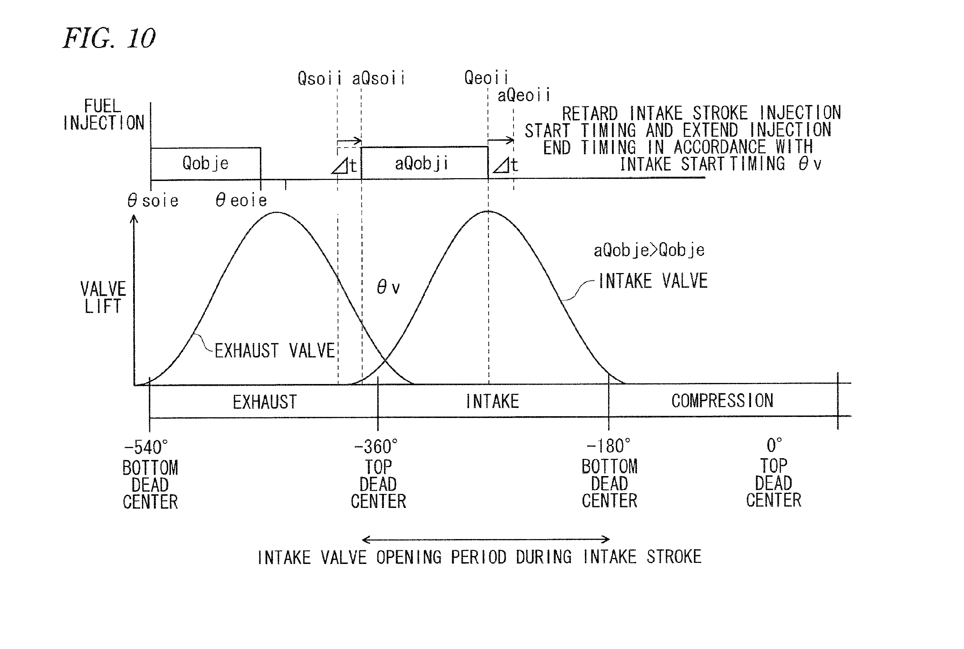

That is, as shown in Fig. 10, the intake stroke injection start timing θsoii is retarded in accordance with the fuel intake start timing θv, and becomes aθsoii, and the intake stroke injection end timing θeoii is extended by the amount Δt, and becomes aθeoii.

Accordingly, in a case where a predetermined torque is required when fuel cannot be injected during an intake stroke, this case is a state where fuel cannot be injected during the intake stroke. However, since a high-load region where knocking is apt to occur exists, the intake stroke injection ratio cannot be made low in order to suppress knocking by the intake cooling effect due to the intake stroke injection. Hence, the intake stroke injection end timing is extended until the maximum lift or less of the intake valve 7, and the required amount of fuel is injected.

Here, fuel injection is ended before the earlier one of when the lift of the intake valve 7 becomes zero and when the intake BDC is reached such that blow-back to the intake port 5 or influence of adhesion to the umbrella portion of the intake valve 7 does not increase. In this case, when the maximum lift timing is exceeded, the amount of fuel which enters a cylinder directly in an intake stroke decreases, and knocking may occur. Thus, the ignition timing may be retarded in order to avoid knocking.

That is, the period Qobji for the fuel injection amount in an intake stroke shown in Fig. 10 is a period from when the lift of the intake valve 7 is opened to after the lift becomes the maximum. That is, as shown in Fig. 11, the period from when the lift of the intake valve 7 is started to when the lift becomes the maximum is a period for which the displacement speed of the intake valve 7 in its opening direction occurs, and is a period for which the displacement speed of the intake valve in its closing direction occurs after the lift becomes the maximum. For this reason, fuel is injected for the period for which suction of an air-fuel mixture into a cylinder is promoted. In a case where a predetermined amount of fuel cannot be injected, injection of fuel is extended even after the period for which the displacement speed of the intake valve 7 in the opening direction occurs so that a required amount of fuel can be secured in the injection of an intake stroke.

In the above-described engine 1, conditions of fuel injection into the intake passage from the injector 10 and the fuel pressure are controlled without providing within a cylinder a direct-injection injector which injects fuel directly into the cylinder, i.e., the ratio of fuel injection in an intake stroke and fuel injection in an exhaust stroke, and the fuel pressure is set according to an operating state, and the optimization of exhaust gas, fuel efficiency, and output is realized.

For this reason, in a high-load region, an intake cooling state and a state of improved filling efficiency in a case where fuel is directly injected into the cylinder can be maintained by fuel injection in an intake stroke to obtain high performance, such as suppressing knocking. Additionally, in a low-load region, deterioration of mixing can be prevented by injection of fuel into the intake passage in an exhaust stroke, in a state where the power loss of the fuel pump is reduced.

Industrial Applicability

The invention can be utilized in the industrial field of an internal combustion engine which can control conditions of fuel injection into an intake passage, thereby improving performance without directly providing within a cylinder a fuel injection device which injects fuel directly into the cylinder.

**Claims**

1. An internal combustion engine, comprising:

   an injector which injects fuel into an intake passage;
   an intake stroke injection means which causes the injector to inject fuel in an intake stroke;
   an exhaust stroke injection means which causes the injector to inject fuel in an exhaust stroke;
   a fuel pressure setting means which sets fuel pressure according to a rotation speed and a load of the internal combustion engine; and
   an injection control means which controls an operation ratio of the intake stroke injection means and the exhaust stroke injection means according to the rotation speed and the load of the internal combustion engine and the fuel pressure which is set by the fuel pressure setting means, and sets fuel injection timing of the injector.

2. The internal combustion engine according to Claim 1, wherein
   as the rotation speed is faster and the load is higher, the fuel pressure setting means sets the fuel pressure to be higher.

**3.** The internal combustion engine according to Claim 1 or 2, wherein
as the rotation speed is slower and the load is higher, the injection control means controls the operation ratio of the intake stroke injection means to be larger.

**4.** The internal combustion engine according to any one of Claims 1 to 3, further comprising:

a fuel pressure detecting means which detects an actual fuel pressure,
wherein the injection control means changes the operation ratio of the intake stroke injection means and the exhaust stroke injection means in a case where the actual fuel pressure detected by the fuel pressure detecting means is different from a target fuel pressure.

FIG. 1

FIG. 2

FIG. 3

```
                                              ←— Ne (32)
        ┌──────────────────┐
        │  FUEL  PRESSURE  │
        │  SETTING  MEANS  │—71           ←— INTAKE AIR AMOUNT (17)
        └──────────────────┘
                 │                        ←— STEPPED AMOUNT (62)
                 ▼
        ┌──────────────────┐
        │   INJECTION      │—72           ←— Preal (64)
        │  CONTORL  MEANS  │
        └──────────────────┘              ←— PHASE AND LIFT (63)
   73            │            74
    │            ▼             │
┌──────────┐        ┌──────────┐
│  INTAKE  │        │ EXHASUT  │
│  STROKE  │        │ STROKE   │
│ INJECTION│        │INJECTION │
│  MEANS   │        │  MEANS   │
└──────────┘        └──────────┘
```

31

INJECTOR 10

# FIG. 4

```
           ┌─────────┐
           │  START  │
           └────┬────┘
                │
    ┌───────────▼──────────────────┐
    │ CALCULATES TARGET TORQUE Tobj FROM │
    │   ENGINE ROTATION SPEED Ne AND    │─── S1
    │ ACCELERATOR OPENING DEGREE θaps   │
    └───────────┬──────────────────┘
```

CALCULATES TARGET TORQUE Tobj FROM ENGINE ROTATION SPEED Ne AND ACCELERATOR OPENING DEGREE θaps — S1

READ AND SET TARGET FUEL PRESSURE Pobj, TARGET TOTAL FUEL INJECTION AMOUNT Qobj, AND TARGET INTAKE STROKE INJECTION RATIO Rin (%) FROM ECU MAP — S2

CALCULATES INTAKE STROKE INJECTION AMOUNT Qobji AND EXHAUST STROKE INJECTION AMOUNT Qobje (Qobji=Rin/100xQobj, Qobje=Qobj−Qobji) — S3

READ AND SET INTAKE STROKE INJECTION END TIMING θeoii AND EXHAUST STROKE INJECTION START TIMING θsoie FROM ECU MAP — S4

DETECT ACTUAL FUEL PRESSURE Preal FROM FUEL PRESSURE SENSOR 64 — S5

S6 — Preal≠Pobj — NO — S7

YES

NORMAL CONTROL (CONTROL BASED ON TARGET Qobji, TARGET Qobje, TARGET θeoii, AND TARGET θsoie)

B

A

14

## FIG. 5

```
        (B)                                                    (A)
         │                                                      │
         ▼                                                      │
┌─────────────────────┐                                        │
│  CALCULATE INTAKE   │                                        │
│  STROKE INJECTION   │                                        │
│   PERIOD Dfi AND    │─── S8                                  │
│   EXHAUST STROKE    │                                        │
│  INJECTION PERIOD   │                                        │
│  Dfe FROM Preal AND │                                        │
│    Qobji, Qobje     │                                        │
└─────────────────────┘                                        │
         │                                                      │
         ▼                                                      │
┌─────────────────────┐                                        │
│  CALCULATE INTAKE   │                                        │
│  STROKE INJECTION   │                                        │
│    START TIMING     │                                        │
│  θsoii FROM Dfi     │─── S9                                  │
│   AND θeoii AND     │                                        │
│  CALCULATE EXHAUST  │                                        │
│  STROKE INJECTION   │                                        │
│  END TIMING θeoie   │                                        │
│     FROM Dfe and    │                                        │
│        θsoie        │                                        │
└─────────────────────┘                                        │
         │                                                      │
         ▼                                                      │
┌─────────────────────┐                                        │
│ CALCULATE FUEL      │                                        │
│ INTAKE START TIMING │                                        │
│ θv FROM Ne, Tobj,   │─── S10                                 │
│ VALVE PHASE, VALVE  │                                        │
│ LIFT, AND CAM       │                                        │
│ SPECIFICATIONS      │                                        │
└─────────────────────┘                                        │
```

$$\theta soii \geqq \theta v \quad \text{NO}$$  S11

PREDETERMINED TORQUE   S13   NO

S12

CONTROL BASED ON TARGET Qobji, TARGET Qobje, θsoii, θeoii, θsoie, AND θeoie

S14

SET θsoii=θv AND, INCREASE Qobje BY DECREASED AMOUNT OF Qobji, AND EXTEND θeoie

S15

EXTEND θeoii IN ORDER TO MAINTAIN Qobji

RETURN

# FIG. 6

FUEL PRESSURE MAP

TARGET TORQUE

HIGH FUEL PRESSURE

LOW FUEL PRESSURE

ENGINE ROTATION SPEED (Ne)

FIG. 7

INTAKE STROKE INJECTION RATIO MAP

TARGET TORQUE

HIGH

LOW

ENGINE ROTATION SPEED (Ne)

# FIG. 8

INJECTION PERIOD Dfi

Qsoii   Qeoii

FUEL INJECTION

Qobje            Qobji

θsoie      θsoie        θv

VALVE LIFT

INTAKE VALVE

EXHAUST VALVE

EXHAUST            INTAKE            COMPRESSION

−540°             −360°             −180°             0°
BOTTOM            TOP               BOTTOM            TOP
DEAD              DEAD              DEAD              DEAD
CENTER            CENTER            CENTER            CENTER

INTAKE VALVE OPENING PERIOD DURING INTAKE STROKE

EP 2 397 680 A2

FIG. 9

FIG. 10

INTAKE VALVE OPENING PERIOD DURING INTAKE STROKE

*FIG. 11*

**EP 2 397 680 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009228447 A